# EUROPEAN PATENT SPECIFICATION

(11) **EP 3 313 189 B1**
(45) Date of publication and mention of the grant of the patent: **25.12.2019**
(21) Application number: 16731929.2
(22) Date of filing: 24.06.2016
(51) Int. Cl.: A21D 13/00

(54) **CRACKER OR SNACK FOOD PRODUCT AND METHOD FOR ITS MANUFACTURE**
CRACKER ODER IMBISS LEBENSMITTEL UND VERFAHREN ZUR DESSEN HERSTELLUNG
ALIMENT DE TYPE CRACKER OU EN-CAS ET SON PROCEDE DE FABRICATION

(30) Priority: 26.06.2015 GB 201511263
(43) Date of publication of application: 02.05.2018
(73) Proprietor: UNITED BISCUITS (UK) LIMITED, Hayes, Middlesex UB4 8EE (GB)
(72) Inventor: FORREST, Adam James, Dartford, Kent DA2 6FW (GB); SCRIVEN, Fiona Jane, Aylesbury Buckinghamshire HP22 5BB (GB); MARKS, Charlotte, Borehamwood Hertfordshire WD6 4BG (GB)
(74) Representative: Abel & Imray
(86) International application number: PCT/EP2016/064747
(87) International publication number: WO 2016/207398

(56) References cited:
- EP-A2- 0 031 802
- WO-A1-2013/116724
- US-A1- 2008 032 006
- US-A1- 2011 311 698
- US-A1- 2012 164 294
- US-A1- 2013 302 487
- US-A1- 2014 050 821
- ANONYMOUS: "Ciabatta Crispbreads", GNPD; MINTEL, February 2003 (2003-02), XP002741278, [retrieved on 2003-02-01]
- ANONYMOUS: "Wholegrain Swedish Crispbreads", GNPD; MINTEL, October 2010 (2010-10), XP002741279, [retrieved on 2010-10-01]

## Description

### Field of the Invention

The invention relates to shelf-stable food products and to methods for their manufacture.

### Background of the invention

Conventional crackers are dry savoury biscuits made mainly from flour, a little fat and water with a raising agent. They have a low moisture content and good shelf stability. They are often relatively bland in flavour and used as an accompaniment to a more intensively flavoured food such as cheese or pate. It is known to add toppings or inclusions such as seeds or dried herbs. Crackers lack the fresh and bready taste of traditional bread products. However, breads suffer from the drawback of having a short shelf-life, quickly losing their "freshly made" aroma, flavour and texture. Some types of cracker and many types of bread require a fermentation step in which a cellular structure is generated by the fermentation process, the cells being enclosed by the gluten network generated from the protein component of the flour. In bread it is in part that cellular structure which results in the soft crumb structure of many breads. A relatively high water content at the dough stage in bread dough promotes forming of bigger cells which contributes indirectly to softness. A relatively high moisture content of, for example, around 20% by weight in the baked bread contributes more directly to the softness of the texture. In traditional bread making, especially, a laborious process of kneading and fermenting steps is used to achieve the organoleptic properties of traditional breads.

WO2013/116724A seeks to adapt the traditional bread recipes for production on a commercial processing line to produce a variety of shelf-stable snack food products that have substantially similar flavours to the traditional breads. With the intention of seeking the stated objective, the inventors of WO2013/116724A disclose extensive adaptation of the traditional bread recipes, incorporating materials that are said to be key classes of ingredients asserted to be necessary to compensate for the lack of appropriate conditions such as moisture, preparation time, baking time and temperatures used to prepare traditional breads. Pregelatinized or native starches are added to enhance the cohesiveness of the dough for sheeting and the integrity of the raw cut dough pieces, to lower breakage in the finished product and to impart a crisp texture, whilst added protein is an essential ingredient to enhance sheeting performance and reduce final product breakage. The doughs described contain in addition to cereal flour at least about 9% starch, with added protein also being an essential ingredient. Other materials that are not normally present in "traditional" bread recipes are also present, for example dried milk powder. The extent to which the resulting product can be reminiscent of traditional breads is thus limited by the need to include substantial amounts of ingredients not normally used in traditional breads to adapt the process for use on a snack production line to produce a shelf-stable snack product.

WO 2013/116724 A1 discloses a baked shelf-stable cracker on snack product. US 2011/311698 A1 discloses a dough roller device. US 2013/302487 discloses forms of chip-type and other fried or baked snack products

### Summary of invention

The present inventors have found that, surprisingly, it is possible to make a shelf-stable cracker or snack product having a flavour and crumb chracteristics reminiscent of traditional bread without resorting to the use of significant amounts of added native or pregelatinized starch. The product of the invention has in particular been found to be reminiscent of traditional bread. In a preferred embodiment the invention provides a cracker or snack product that is reminiscent of traditional ciabatta.

In a first aspect of the invention bread-like flavour is enhanced by the presence of a dusting comprising a material amount of wheat endosperm particles on the surface of the product.

Thus, the invention provides a baked shelf-stable cracker or snack product, comprising:
a body comprising at least 60% by weight wheat flour, from 5 to 22 % by weight fat, 0.7 to 7 % by weight leavening agent and up to 5 % by weight water, in each case based on the total weight of said body, and
a surface dusting, on at least one surface of the body, of a particulate material, the particulate material comprising at least 30% by weight, for example at least 50% by weight, based on the total weight of the particulate material, of wheat endosperm particles;
wherein said surface dusting is present on the product in an amount of at least 0.5% by weight, based on the total product weight.

In one embodiment of the invention, the product made is a cracker or snack product that is reminiscent of ciabatta bread. The product is characterised by a dusting of wheat endosperm particles, preferably wheat flour and/or semolina, on the product surface, and in preferred embodiments additionally by an open texture with a variable crumb size and many large air cells and a relatively hard and crunchy outer crust.

### Definitions

Unless otherwise indicated herein, particle sizes expressed with reference to a material in µm are determined by sieving using a silk gauze sieve with mesh openings of the specified dimension in µm. The percentage of the material retained on the sieve and/or the percentage by weight of the material that passes through the sieve may be determined, in each case by weight based on the total weight of the material.

Unless indicated otherwise, percentage values stated herein with reference to a product, dough or other entity are % by weight based on the total weight of the product, dough or other entity respectively.

Farinograph traces are a well-known tool used, particularly in the bakery industry, for measuring certain properties of flour, and are generally in the form of a curve, the shape of which is related to the quality of the flour. Farinograph traces referred to herein are as measurable in accordance with the method hereinafter described,

The "degree of softening" as referred to here is determinable from a farinograph trace and is to be taken as the difference in height in Brabender units (BU) between the centre of the curve at the peak (immediately before the signs of weakening) and the centre of the curve 12 minutes later. The degree of softening is reported to the nearest 5BU.

"Fracturability" is used herein to describe the number of measurement peaks as obtained in the fracturability method described in this specification, and is stated with reference to the number of "events" in which each event corresponds to a measurement peak. Fracturability is determined for a representative sample of products, for example, five products or ten products, with the fracturability value being the arithmetic mean of the values determined.

"Brightness" is used herein to refer to the mean grey level of the pixels lying within the product, on a calibrated grey scale for which a reference grey card has a constant value of 150. Lower values represent darker products, and may be caused by a darker product colour or by stronger shadows caused by a coarser structure. Brightness is measurable in a C Cell test as described herein, and as compared with a calibrated C Cell grey scale. Brightness values provide an indication of deep cells within the matrix of a product, with a high brightness value correlating with absence of deep cells.

A percentage of a total cross-sectional area occupied by cells referred to herein is based on the number of cells in that total cross-sectional area that are detected by C-Cell (as described herein) at an image resolution of 28 pixels/mm and excludes smaller cells not resolved at that magnification. The averaged total cell area of cells in cross-section is to be understood herein as referring to the averaged total cell area as calculated from C-Cell examination of at least three random sections through the product. C-Cell examination is well-known in the art to provide good discrimination of cell structures in baked goods. The C-Cell equipment is arranged to calculate a number of parameters of baked products using statistical processes incorporated within the device software.

### Detailed description

The invention, which is defined by the claims, makes possible the manufacture of a shelf-stable product which in some respects is reminiscent of a hand-made or artisanal bread product. The cracker or snack product of the invention is advantageously a continuously sheeted product. In a continuous sheeting process, a dough is continuously formed into a sheet between forming rollers and the emerging sheet is continuously advanced along a path, optionally through at least one pair of reducing rollers in which the sheet is reduced in thickness, to a cutting station at which individual pieces are cut from the dough for subsequent cooking. It is important in the manufacture of sheeted products that the dough sheet is a coherent sheet that has good viscoelastic properties which permit the processing of the sheet whilst minimising disruption of the process through sheet breakage or excessive adhesion to the rollers which can disrupt the feeding of the sheet or even lead to sheet breakage. Whilst manufacture of cracker and snack products by a continuous sheeting process offers significant advantages in terms of efficiency and speed, the requirement for efficient sheet formation and good sheet handling properties significantly reduces the freedom to modify the sheet recipe to achieve new and interesting organoleptic properties in the product.

Whilst benefiting from qualities reminiscent of certain fresh bread products, the cracker or snack product of the invention is shelf-stable, being capable of retaining texture and flavour for extended periods of time, for example at least ten weeks, preferably at least twenty weeks, and more preferably at least twenty six weeks at ambient temperatures. The cracker and snack products of the invention comprise a substantial proportion of wheat flour as indicated above. In a snack product or cracker product according to the present invention having a body and surface dusting, the wheat flour is present in an amount of at least 60% by weight, and advantageously may be present in said body in an amount of at least 65% by weight, preferably at least 70% by weight, for example at least 75% by weight, based on the total weight of the body. Whilst other flours may be present, it is important that a major proportion of the flour used in the said body is wheat flour with any other flour(s) being present in minor proportions of not exceeding in total 25%, and preferably not more than 20%, of the total flour content.

Where present in the products according to the invention, other flours are preferably other cereal flours, and may include for example one or more flours selected from rye flour, spelt flour, rice flour, oat flour and maize flour.

References herein to "wheat flour" refer to flour obtained from any variety of wheat. Preferably, wheat flours used in accordance with the invention are flours obtained from common wheat (*Triticum aestivum*). Many varieties of common wheat and flours obtained by milling them are widely available on the international commodities market.

According to the invention, the dusting is of a particulate material comprising wheat endosperm particles. Wheat endosperm particles may be particles of any wheat variety. The particulate material advantageously comprises one or more particulates selected from wheat flour, wheat meal and semolina. The term "semolina" is used herein to refer to coarsely ground wheat endosperm having a particle size such that at least 80% of the coarsely ground wheat endosperm is retained on a 315µm silk gauze sieve. Semolina from any variety of wheat may be used, with semolina from durum wheat (*Triticum durum*) being advantageously used in certain embodiments. Many varieties of durum wheat and semolinas obtained by milling them are widely available on the international commodities market. Semolinas obtained from varieties of common wheat may also expediently be used in some embodiments. In one embodiment, most or all of the dusting, for example at least 80% or more by weight, of the dusting may be semolina. The dusting in one embodiment comprises semolina, the semolina having a particle size such that less than 20% by weight of the particles pass through a silk gauze sieve with mesh openings of 315µm, and preferably at least 20%, more preferably at least 50%, especially at least 80%, by weight of the particles pass through a silk gauze sieve with mesh openings of 600µm.

In another embodiment, the dusting comprises wheat flour. For example, most or all of the dusting, for example at least 80% or more by weight, of the dusting may be wheat flour. Advantageously, wheat flour used as or in the surface dusting has a particle size such that at least 20% by weight of the particles pass through a silk gauze sieve with mesh openings of 315µm, and preferably at least 20% by weight of the particles pass through a silk gauze sieve with mesh openings of 200µm. For example, in some embodiments, the dusting comprises wheat flour having a particle size such that at least 80% by weight, and preferentially substantially all of the particles pass through a silk gauze sieve with mesh openings of 315µm. In some embodiments the dusting comprises wheat flour having a particle size such that at least 80% by weight, and preferentially substantially all of the particles pass through a silk gauze sieve with mesh openings of 200µm.

If desired, there may be used in the particulate material both a coarsely ground wheat endosperm material, for example semolina, and a more finely ground wheat endosperm material, for example wheat flour. For example, the particulate material may comprise both a semolina having a particle size such that less than 20% by weight of the particles pass through a silk gauze sieve with mesh openings of 315µm and at least 20%, more preferably at least 50%, especially at least 80%, by weight of the particles pass through a silk gauze sieve with mesh openings of 600µm, and a wheat flour having a particle size such that at least 20% by weight of the particles pass through a silk gauze sieve with mesh openings of 315µm, preferably 200µm. Advantageously most or all of the dusting in this embodiment, for example at least 80% or more by weight of the dusting may be made up of semolina and wheat flour.

Where there is used as the surface dusting of particulate material a wheat flour, any wheat flour may be used. For example, in some embodiments a plain white flour may be used as the surface dusting.

The particle size of the dusting may be selected to influence the bread-like qualities of the product. For example, smaller particles may be used to enhance a ciabatta-like effect, whereas other sizes may render the product more reminiscent of other types of bread.

If desired the particulate material may in addition to wheat endosperm material, contain other cereal flours or particles, for example selected from other cereal flours or particles, including but not limited to one or more of maize flour, rice flour, oat flour, and rye flour; as well or instead of other cereal flours the particulate material may additionally contain other starchy materials, for example, one or more of tapioca flour, potato flour, potato granules, potato flakes, and vegetable powders and/or starches from any of the afore-mentioned materials. In practice it is preferred that the amount of wheat endosperm material in the particulate material is not less than 50% by weight, based on the total weight of the particulate material, since that typically imparts a good impression of bread-like qualities, contributing materially to a bread-like aroma and flavour. Where the amount of wheat endosperm material is low, for example is from 30 to 50% by weight based on the total weight of the particulate material, it may be desirable for the particulate material additionally to contain a bread flavouring to further enhance the bread flavour and/or aroma of the product.

Particulate materials used as surface dusting in accordance with the invention preferably are, or consist mostly or essentially of wheat flour or semolina. In practice, the dusted-on wheat flour or semolina will then remain visible as a surface dusting of flour or semolina in the baked product.

It is preferred that the product is predominantly based on wheat flour. Preferably, at least 65% by weight of the starch content of the product is contributed by wheat flour in the product.

In the product of the invention the body (that is, the product excluding the surface dusting) comprises fat in an amount not exceeding 22% by weight, based on the weight of the body and excluding the surface dusting. Advantageously the product comprises at least 5% fat by weight, and preferably at least 7% by weight, in each case based on the weight of the body and excluding the surface dusting. In certain preferred embodiments the surface dusting comprises no added fat. The total fat content of the product advantageously does not exceed 20% by weight, more preferably does not exceed 15% by weight, based on the total weight of the product.

Fat present in the cracker or snack product of the invention may be any fat suitable for use in crackers or snack products. Illustrative and non-limiting examples of such fats include unhydrogenated, partially hydrogenated and hydrogenated vegetable oils. Exemplary suitable oils include palm oil, sunflower oil and rapeseed oil, with palm oil being advantageous. Other oils, for example, olive oil, safflower oil, coconut oil or high-oleic sunflower oil, may also be suitable, and may be considered advantageous for nutritional reasons. Where oils that have limited shelf-life are used it may be advantageous to include a suitable preservative to ensure that the oil remains edible without flavour deterioration over the shelf-life of the product. In some cases, two or more oils may be used and may help to obtain desired organoleptic properties.

Advantageously, the surface dusting, where present, is present in such an amount that it constitutes at least 0.5%, and preferably at least 1%, by weight of the total product weight. For example, the surface dusting may comprise from 0.5 to 30 wt % of the total product weight. In some products, it is preferred that the amount of surface dusting does not exceed 15 wt % of the total product weight, for example the dusting may be up to 10%, for example, 3 to 10% by weight of the total product weight. Thus, in certain embodiments, the product may comprise, by weight, from 70 to 99.5% of said body and 0.5 to 30% of surface dusting.

In some embodiments a surface dusting may be provided on more than one, or on all surfaces, of the cracker or snack product, for example on the upper and lower surfaces. It may be preferred, however, for the surface dusting to be present on only a proportion of the surface. For example, there may be a surface dusting on one main surface of the cracker or snack product, preferably the upper surface, whilst the other main surface (preferably the bottom surface) is free, or substantially free, of the surface dusting.

It is advantageous that the cracker or snack products of the invention have an open cellular structure, preferably including at least some surface blisters. For example, the product may have a cellular structure wherein the averaged total cell area of cells in cross-section is at least 40%, preferably at least 50%, of the total cross-sectional area of the product.

It has been found that an open cell structure contributes significantly to the bread-like characteristics of the product.

It is also advantageous for the product to have a high fracturability, as that imparts a desirable texture to the product. In some embodiments, a cracker or snack product according to the invention may have a fracturability (as hereinafter defined) of at least 28 events. Fracturability of 28 events or more is correlatable with an open cell structure with numerous cells having a large size distribution, which has been found to impart a unique and advantageous texture.

Whilst a surface dusting is not essential in the cracker or snack product according to the second aspect of the invention, it may be advantageous for such a dusting to be present, in which the dusting will advantageously, but will not necessarily, be as described and claimed herein with reference to cracker products or snack products according to the first aspect of the invention.

The inventors have found that the generation of a structure reminiscent of bread can be enhanced by control of the composition of the dough used to make the product. It is preferred that the flour in the dough has a protein content of from 8.5 to 13.5% by weight based on the flour weight. Optionally, further protein-containing ingredients may be included in the dough. However, in order to obtain a bread-like product as desired, any added protein should be selected to avoid undesirably influencing the product flavour. Where additional proteins are present, suitable proteins for use as an additional protein-containing substance include, for example, wheat gluten. Where an added protein is used, it is desirable for the amount to be selected with due regard to the inherent protein content of the flour, and it is non-preferred for a major proportion of the protein content to be contributed by an added protein rather than the inherent flour component(s).

The inventors have also found that the quality of protein in the flour used to make the dough can influence whether the desired texture will be obtained, especially the desired fracturability. The degree of softening is a parameter used by those skilled in the art as an indicator of protein quality. In practice, the protein quality of the flour is a significant factor in forming the correct gluten network to achieve the desired cell formation and cell retention in the final product, As indicated above, the degree of softening can be determined from a farinograph trace. In a preferred embodiment, a cracker or snack product comprises a flour with a protein quality such that the degree of softening is below 145 Brabender Units, optionally not more than 130 Brabender Units, for example not more than 120 Brabender Units. Preferably, the flour has a protein quality such that the degree of softening of the flour is not less than 80 Brabender Units, more preferably not less than 90 Brabender Units. Outside of those parameters, it has been found that the outer crust may have a lower degree of hardness and crunchiness, whilst the cell structure may be less good than in certain preferred embodiments, reflected in fracturability values that are lower than the preferred minimum of 28 events. The use of flour relaxants or other ingredients that materially affect protein performance in a dough may undesirably affect the dough behaviour and may therefore be non-preferred where a high fracturability of at least 28 is desired.

Leavening agents used herein may be any agents that are suitable for use in aeration of baked products. Advantageously the leavening agent is yeast. Yeast may be used in dry or liquid form. Whilst other leavening agents may if desired be present in addition to yeast, it is preferred that yeast is the primary leavening agent. One or more chemical leavening agents may if desired be used as well or instead of yeast. The use of yeast as some or all of the leavening agent present is believed to be advantageous in generating internal crumb structure that has been found to contribute to a cell structure that has been found to be reminiscent of ciabatta bread. Control of the amount of yeast, the protein quality, the amount of protein and the dough water content are believed to play a part in generating an open cellular structure and/or a fracturability of at least 28 in the cracker or snack product according to some advantageous embodiments of the invention.

Advantageously, the thickness of the product is such that the height of a stack of ten products is from 60 to 120mm, for example 80 to 100mm.

Where the product is a snack product it advantageously has a width in the range of from 30 to 60mm and a length in the range of from 30 to 70mm. Where the product is a cracker, it advantageously has a width of from 50 to 80mm and a length of from 80 to 130mm.

The invention also provides a process for making a shelf-stable cracker or snack product comprising preparing a dough comprising at least 50 parts by weight wheat flour, from 5 to 15 parts by weight fat, 0.5 to 5 parts by weight leavening agent and from 15 to 30 parts by weight water, forming the dough into a dough sheet, cutting dough pieces from the sheet and baking the dough pieces to a water content of not more than 5% by weight to obtain a baked shelf-stable snack product, wherein before or after said cutting of dough pieces from the sheet a dusting of a particulate material comprising wheat endosperm particles is delivered onto a surface of the dough, whereby the baked product has a visible surface dusting comprising wheat endosperm particles.

Advantageously, said dusting of a particulate material comprising wheat endosperm particles is delivered onto a surface of the dough sheet and the sheet is subjected to a reducing step in which the sheet passes between opposed reducing rollers and said dusting becomes more firmly adhered to the sheet surface before said cutting step. It is possible instead, however, for the dusting to be applied to the dough pieces after cutting.

Advantageously the leavening agent is yeast and the dough is subjected to a fermentation step before it is sheeted. For example, the dough may be fermented for a period of from 10 minutes to 4 hours. Advantageously, the yeast is present in an amount of 0.3 to 2.6% by weight based on the total dough weight. The yeast may be in any suitable form, with illustrative yeasts being fresh yeast, dried active yeast, or compressed yeast. Dried active yeast offers the advantage of ease of handling and processing. Other yeast ingredients may include higher water contents. It is therefore convenient to define the yeast content in terms of the amount of yeast dry matter. The yeast dry matter is advantageously present in an amount of 0.3 to 2.6% by weight based on the total dough weight.

In cracker or snack product of the invention with a moisture content not exceeding about 5% by weight, yeast is advantageously present in an amount of at least 1% by weight. Advantageously the yeast is present in an amount of up to 4% by weight, based on the product weight excluding the surface dusting. For example the yeast may be present in an amount of 1.5 to 2% by weight based on the product weight excluding the surface dusting.

Optionally the cracker or snack product may comprise more than one leavening agent. Advantageously, at least one of said leavening agents is a yeast. For example, it may be expedient to use yeast as a leavening agent in combination with a chemical raising agent. The total amount of said yeast and further raising agent is advantageously not more than 7% by weight, and preferably not more than 5% by weight of the product, excluding surface dusting.

The inventors have found that an added water content of at least 22% by weight, preferably at least 23% by weight, in the dough is desirable in order to permit the desired cell formation to take place. Advantageously, the water content, as calculated based on the flour content, is at least 33% or at least 34% by weight. It is preferred that the sheet is subjected to at least two reducing steps prior to application of said dusting. In practice the sheet may be subjected to two or more reducing steps, for example three reducing steps, in each of which the sheet passes through gauge rollers that compress the sheet, reducing sheet thickness. The sheet is advantageously subjected to a reducing step after application of the flour dusting. The inclusion of a reducing step after application of the flour dusting ensures that the flour is more reliably adhered to the surface of the sheet. It will be appreciated that the conditions in that reducing step should be so selected that the reduction is not so severe that the flour dusting becomes so embedded in the product surface that it is indistinguishable in the baked product.

In practice, it is usually expedient that the dusted sheet be subjected to an embossing and/or dockering step in which the product is marked with an impressed surface pattern and/or is provided with dockering. Such a step serves to pierce the sheet surface to a degree that limits large blisters being formed. The dockering may serve additionally for decorative purposes but primarily contributes to more even formation of cells in the product during baking.

If desired, the dusting can instead be applied to the dockered or embossed pieces after dockering and cutting. Advantageously, the dusting comprises wheat endosperm particles, for example wheat flour and/or semolina, in an amount of not less than 50%, preferably not less than 70%, more preferably not less than 90%, by weight based on the total weight of the dusting.

Advantageously, said baking step comprises baking at a temperature of from 105°C to 345°C, for example 180 to 240°C to a moisture content of not more than 5% by weight based on the total weight of the baked product, and preferably not more than 3% by weight based on the total weight of the baked product.. Advantageously, said dough pieces are baked at a temperature of 180 to 240°C for not more than 10 minutes, for example for about 7 to 8 minutes. Where temperatures of more than 240°C are used for some or all of the baking step, the baking time may be reduced, for example to less than 7 minutes. Advantageously the baking step comprises conveying the pieces through a continuous oven on a conveyor. In that case, the oven may optionally contain two or more zones which may be maintained at different temperatures. As is usual in the art, the precise baking conditions may depend on the oven used. The selection of a suitable baking profile, including a baking temperature profile, will be a routine matter for those skilled in the art. Advantageously there may be used a conveyor that is air-permeable, for example a belt having a multiplicity of apertures, or a mesh belt. In some embodiments the baking step may comprise baking the pieces to a moisture content of not more than 5% and thereafter subjecting the pieces to a further drying step, for example effecting further drying to a moisture content of not more than 3% by weight or more preferably not more than 2% by weight. Where present, such a further drying step may comprise an electromagnetic method, for example drying in a radio-frequency (RF) oven.

Optionally, the baked pieces, after a further drying step if present, may be subjected to one or more finishing steps, for example including the application of oil and/or flavouring. For example, the cooked pieces may be subjected to an oil application step in which they are sprayed with oil. If desired, the oil spray may include a flavouring.

Advantageously, the thickness of the sheet immediately before cutting is from 1 to 2.5mm preferably from 1.2 to 2.2mm, for example from 1.5 to 2mm, especially from 1.6 to 2mm. In certain embodiments it is preferred that the sheet thickness before cutting should be not more than 2mm. It has been found that sheeting to thicknesses of 2mm or less can result in more open cell structure than where higher thicknesses are used.

In the case of cracker products, pieces are cut with a width of from 50 to 80mm and a length of from 70 to 115mm. Where the product is to be a snack product it may be appropriate for the pieces to be smaller, for example the pieces may be cut with a width of from 30 to 60mm and a length in the range of from 25 to 65mm.

The cracker or snack piece may include one or more further minor ingredients, for example one or more ingredients selected from flavouring, herbs, vegetable pieces, sodium metabisulfite. Where present the total weight of said minor ingredients is advantageously not more than 10%, preferably not more than 6%, by weight of the product, excluding the surface dusting. In an illustrative embodiment, minor ingredients may be present in the dough in an amount of up to 3% by weight based on the total dough weight, which may typically correspond to up to 3.9% by weight in the finished product (excluding dusting). As indicated further below, certain crackers or snack products according to the invention may include oil, optionally including a flavouring, applied to the product after baking. For the avoidance of doubt, the cracker or snack product may include such oil and flavouring applied after baking in addition to the said minor ingredients.

Cracker or snack products according to the invention are preferably savoury. Some crackers and snack products according to the invention will contain no added sugar. Crackers and snack products containing no added sugar may nonetheless contain sugar in the form of sugar that is inherently present in one or more of the ingredients of the product. A small proportion of added sugar may also be present. In practice, crackers and snack products according to the invention preferably contain no more than 6% by weight, based on the total weight of the product excluding the dusting, of sugar, including both any added sugar and any sugar that is inherently present in one or more of the ingredients. The dusting may, as well or independently, be free of added sugar, and preferably contains no more than 6% (based on the weight of the dusting) of sugar including both any added sugar and any sugar that is inherently present in one or more of the ingredients. The term "sugar" is to be understood to refer to sucrose or any other mono- or di-saccharides, including glucose, fructose, galactose, lactose and maltose. - Sugars contained in other ingredients such as milk, whey and syrups will only be included where they meet the requirements of the prior definition. Whilst other natural and artificial sweeteners are not preferred in the product, they are not to be regarded as excluded as such. Savoury products that may desirably contain added sugar and/or other sweeteners include, for example, products which have a "sweet-savoury" flavour, such as "sweet and sour" or "barbeque" flavoured products.

Snack products of this invention will generally be primarily distinguishable from crackers of the invention in terms of their presentation, for example, their configuration, size or the way in which they are packaged and sold. Snack products according to the invention will typically be packaged in pouches containing a multiplicity of the products, the products being randomly arranged and freely movable within the pouches. Crackers according to the invention will typically be formed into a stack, optionally received within a plastic tray, with packaging film being formed into a snugly fitting pack around the stack or, where present, around the tray. Whereas in general snack products according to the invention will be of smaller dimensions than most crackers of the invention, smaller crackers may in effect be of similar size to larger snack products, with such products being distinguished from each other primarily by the way in which they are presented rather than in size. Thus, the present invention provides a pack comprising a multiplicity of snack products of the invention enveloped within a film pouch, the snack products being freely movable within the pouch and relative to one another.

The invention also provides a pack comprising a multiplicity of crackers of the invention arranged in at least one stack within the pack, the crackers in the or each said stack being arranged in register with one another and optionally being received within a tray, the crackers and, if present, the tray, being enveloped within a film wrapper such that the crackers are retained in register within the pack at least until the pack is opened.

The snack products or cracker products of the invention may optionally be provided with salt and/or other flavourings which may be added before or after baking.

### Description of Drawings

Fig. 1 is a schematic view of an apparatus for use in a process of making a cracker according to a first embodiment according to the invention;
Fig. 2 is a section through a portion of a cracker according to an embodiment of the invention, as imaged using a C-Cell device as herein described; and
Figs 3a, 3b and 3c are farinograph traces of flours used in Examples 5 to 7 below.

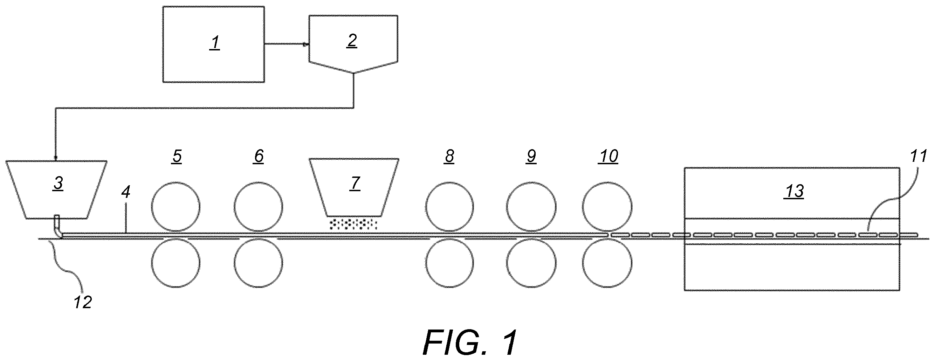

One form of process for making crackers according to a first and illustrative embodiment of the invention in which a dusting of flour is applied to dough pieces before baking will be described with reference to Fig. 1 which shows an apparatus for use in the continuous manufacture of crackers. Ingredients are mixed with water in a mixer 1, from which the dough obtained is transferred to a fermentation hopper 2. The water may be at slightly above ambient temperature, for example at 25 to 40°C.

After fermentation, for example for a period of 10 minutes to 2 hours, the dough is transferred to the hopper of a sheeting device 3, from which the dough is expelled in the form of a sheet 4. The dough sheet 4 is fed via a first pair 5 of gauge rollers (reducing rollers) and second gauge roller pair 6 to a flour dusting device 7, from which a dusting of flour is sprinkled onto the upper surface of the continuously moving dough sheet. The sheet 4 with applied dusting of flour is then passed between gauge rollers 8 and embossing rolls 9 to cutting rolls 10 at which the sheet is cut into pieces 11. The embossing rolls 9 may carry a reverse image of a surface design to be applied to the crackers (such as a decorative design, logo or trade name) and/or may serve as a dockering device to docker the sheet. Whilst the apparatus of Fig. 1 includes separate embossing/dockering and cutting roll sets, it is possible for any two or all three of those steps to be carried out at the same set of rolls, as is known in the art.

Surplus dough is returned to the hopper of sheeting device 3 via a recycle conveyor (not shown). The cut pieces are carried on a conveyor device 12 into a continuous oven 13. The pieces are cooked during transit through the oven in known manner, and the conditions in the oven are so controlled that on emerging from the oven the baked pieces 14 have a moisture content of not exceeding 5% by weight, preferably not exceeding 3 % by weight. If desired the pieces may be baked in oven 13 to a first moisture content, for example 5%, and then further dried to a moisture content of not more than 3% by weight in an additional subsequent RF oven (not illustrated in the drawings), which, if present, is preferably in the form of a continuous oven in which pieces leaving the oven 13 are continuously transported through the RF oven on a conveyor. If desired, the cooked pieces may be subjected to one or more further finishing steps, for example a step in which they are sprayed with oil and/or flavouring. Additional ingredients such as oil and flavouring will be applied in minor amounts, and where present will preferably make up no more than 15% of the total product weight.

The pairs of gauge rollers each serve to reduce the thickness of the dough sheet. The apparatus of Fig. 1 is described as having three pairs of gauge rollers but it is also possible for the apparatus to have a different number of gauge roller pairs. For example, in some embodiments it has been found preferable to include three pairs of gauge rollers upstream of the dusting device. The optimum number of gauge rollers will in part depend upon the viscoelastic properties of the dough and the selection of an appropriate number of gauge rollers for a given dough will be a routine matter for those skilled in the art.

Whilst the process shown in Fig. 1 is described with reference to a dusting of flour, the apparatus and process may be carried out using a suitable device for applying a dusting of a particulate material containing larger particulate material such as semolina. Optionally, the dough may be subjected to a lamination step. Where present, a lamination step may be provided at any point between sheet formation at sheeting device 3 and the second gauge roll pair 6. At least one pair of gauge rollers should be provided after lamination and before the dusting device.

### Methods

### Method for determining fracturability

Fracturability values stated herein were measured using an Ottawa Cell & Plunger with a square 70x70mm Probe (Stable Micro Systems). The settings for the device were as follows:
Test mode: compression
Test speed: 1mm/sec
Trigger force: 100g
Maximum force: 30kg
Macro: count peaks

The test is carried out for a sample of ten biscuits from the same batch. Measured values were obtained by placing one biscuit in the test cell and advancing the probe at the constant test speed vertically downwards onto the biscuit, the process being repeated nine times with a new biscuit each time. For each biscuit, the test generates a plot which shows a peak correlating with each fracture. The events are counted to obtain an event total for each biscuit tested and the average of the 10 event totals so obtained is the fracturability.

The fracturability links closely with the coarseness of the product. The higher the fracturability of the product the coarser its structure is (more, larger air cells). This can be further corroborated by using brightness as a measure.

### Methods for determining cell structure and % cells

Samples were analysed using a C-Cell instrument (Calibre Control International Ltd) fitted with a 50mm focal length lens (available from Tamron Co. Ltd under the model number 23FM50SP) to provide a resolution of 0.0356 mm/pixel. Ten replicate crackers from each sample were randomly selected for C-Cell analysis. All products were cut with a scalpel, then abraded with medium grade sandpaper to expose a flat surface for analysis. The crackers were cut between rows of docker holes. Dust created by the abrasion process was removed prior to analysis. Samples were imaged within 15 minutes of being prepared.

Samples were placed in the instrument and illuminated obliquely from two sides to reveal the cell structure of the exposed surface. The crackers were held in an upright position (with the prepared cross section pointing upwards, facing the camera) using black plastic supports. (The edges of the black plastic supports were removed from the images prior to analysis.) Grey scale images of each sample were taken, using a brightness scale calibrated against a grey card of standardised reflectance supplied with the C-Cell instrument. The images were analysed to measure the dimensions and cell structure. Several standard measurements were calculated by the instrument software, including the brightness. A list of areas of each cell detected was also output and was used to calculate additional measurements describing the cell size distribution and % cell area in each cracker cross-section. The measurements from each of the ten crackers were used to generate mean values for each parameter.

### Method for obtaining farinograph traces and determination of degree of softening

A farinograph trace is obtainable using standard methods in commercially available standard testing apparatus routinely used in the baking industry. Measurements of farinograph traces herein were made using a Farinograph (trade mark) manufactured by Brabender GmbH and Co. KG of Duisburg, Germany, and having an attached mechanical continuous chart recorder which operates at a speed of 10mm/min. Measurements were carried out with the speed of rotation of the mixing blades at 63rpm using a 300g bowl. Flour (300g) was equilibrated to room temperature before use. The method used was that of International Association for Cereal Science and Technology (ICC) Standard Method No. 115/1 except that no adjustment was made to the weight for any moisture that may be present in the flour and mixing was carried out to a consistency of 600 (+/- 20) BU instead of 500BU, mixing to 600BU being common practice in the United Kingdom when carrying out this measurement method. The temperature of water used to fill the burette and subsequently added to the flour to form the dough is 30°C (+/- 0.5°C).

### Example 1

A cracker was made using the ingredients and quantities listed in the table below.

| **Ingredient** | **%** |
|---|---|
| Wheat Flour | 67% |
| Palm Oil | 7% |
| Yeast | 1% |
| Salt | 1% |
| Water (25 to 40°C) | 24% |

The yeast and water were mixed using a Z-blade mixer and mixed slowly for 60 seconds. The flour (with a protein content of 10.6% by weight and a degree of softening of 130), palm oil and salt were then added and mixing continued for 180 seconds at high speed. The temperature of the dough after mixing is around 30-32°C. The dough is left to stand for between 15 and 90 minutes. The dough is then placed in the hopper of a sheeter and formed into a sheet which is optionally passed through a lamination device where lamination is carried out to a maximum of three layers. The sheet is passed through a series of three pairs of reducing rollers. After emerging from the second pair of reducing rollers the sheet is passed under a dusting device from which wheat flour is sprinkled onto the upper surface of the dough sheet. The sheet then passes through a further pair of gauge rollers which serves to increase the adhesion between the dusted wheat flour and the sheet. On emerging from the gauge rollers the thickness of the sheet is 1.7mm. The sheet is then passed between cutter rollers at which pieces are cut from the sheet, the pieces having dimensions of 65mm by 105mm. The pieces were baked in a travelling oven at a temperature of 200-235°C for 6 to 8 minutes at which time they had a moisture content in the range of 3 %. The resulting products were crackers characterised by, as compared with conventional crackers, an open texture, variable crumb size, many large air cells and a relatively hard and crunchy outer crust. The flour dusting was present in an amount of about 1% by weight, based on the total weight of the cracker product.

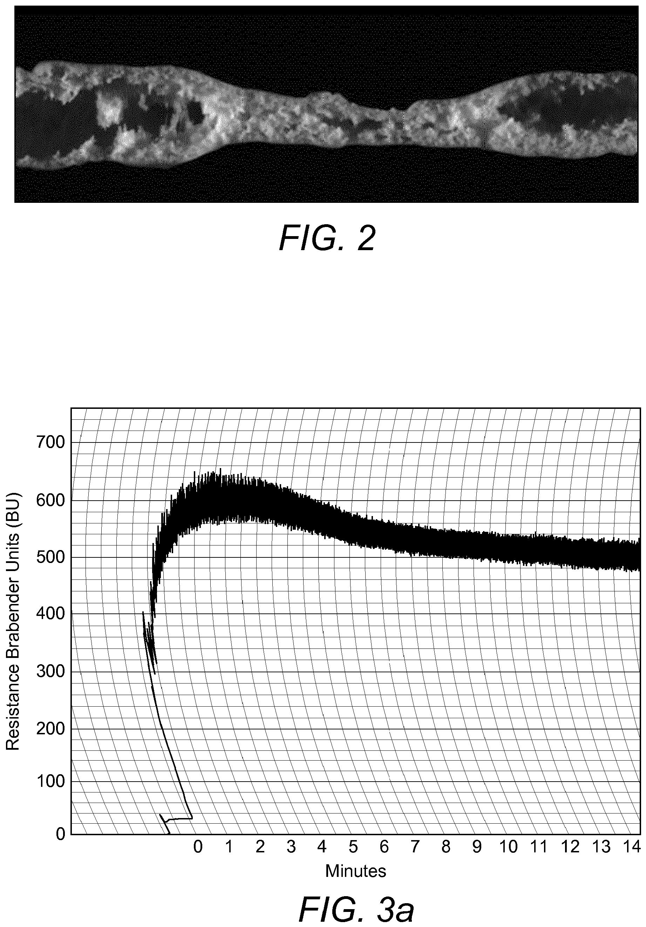

The proportion of the cracker section occupied by air cells was at least 50%, as determined by the C Cell instrument using the method described above using measurements for ten crackers. Fig. 2 is an image of a section through a part of a product of Example 1 obtained using the C Cell instrument, and shows the open structure with multiple open cells of varying sizes.

### Example 2

Further crackers were made according to the process described in Example 1 except that the wheat flour in the flour dusting device was replaced by durum semolina. The semolina was present in an amount of about 5% by weight, based on the total weight of the cracker product.

### Example 3 (comparative)

Further crackers were made according to the process described in Example 1 except that the flour dusting device was omitted so that the products had no flour dusting.

### Sensory Evaluation

The cracker products of Examples 1 (wheat flour dusting), Example 2 (semolina dusting) and Example 3 (no dusting) were assessed by a trained sensory panel of 12 members using QDA (quantitative descriptive analysis) in comparison with a commercially available standard cream cracker product. QDA is one of the main descriptive analysis techniques used in sensory evaluation.

Bread flavour intensity scores were rated on a scale of 1 to 100:

| **Product** | **Score** |
|---|---|
| Standard cracker | 32 |
| Example 3 (no dusting) | 50 |
| Example 1 | 64 |
| Example 2 | 65 |

The crackers of Examples 1 and 2 were perceived as having a statistically significantly stronger bread flavour than the Standard cracker and the cracker of Example 3, which is comparative. Whilst the cracker of the Example 3 had a greater bread flavour than the Standard cream cracker, the flavour was perceived even more strongly in the crackers of Examples 1 and 2. The mean intensity scores of the Standard cracker and the cracker of Example 3 were statistically significantly different at the 5% level (p < 0.05) from each other and from the crackers of Examples 1 and 2. The difference in bread flavour intensity score between the crackers of Examples 1 and 2 was not statistically significant.

Seventeen assessors were asked to taste the cracker of Example 1 and the Standard cracker and indicate their liking on a 9 point scale, for appearance, flavour, texture. They were also asked to indicate their overall preference.

There were statistically significant differences between the Standard cracker and the cracker of Example 1 in appearance, texture and flavour liking. There was also a statistically significant preference for the cracker of Example 1.

### Example 4

The process of Example 1 was used to produce a dusted sheet of thickness 1.7 mm except that the sheet was fed between different cutter rollers to obtain smaller pieces, of 45mm by 50mm. The pieces were baked to obtain bite-size snack products with a flavour and texture reminiscent of bread.

### Example 5 (not according to the invention)

Crackers were made using the method described in Example 1 using a wheat flour with added gluten giving a total protein content of 13.5% by weight (based on the weight of the flour plus gluten) and a degree of softening of 95 BU as determined from the farinograph trace shown in Fig. 3a.

| **Ingredient** | **% by weight** |
|---|---|
| Wheat Flour | 65% |
| Gluten | 2% |
| Palm Oil | 7% |
| Yeast | 1% |
| Salt | 1% |
| Water | 24% |

The product was found to have a fracturability of 37 events, and had an open, coarse structure with a significant number of large air cells, resulting in an attractive open eating texture.

### Example 6 (not according to the invention)

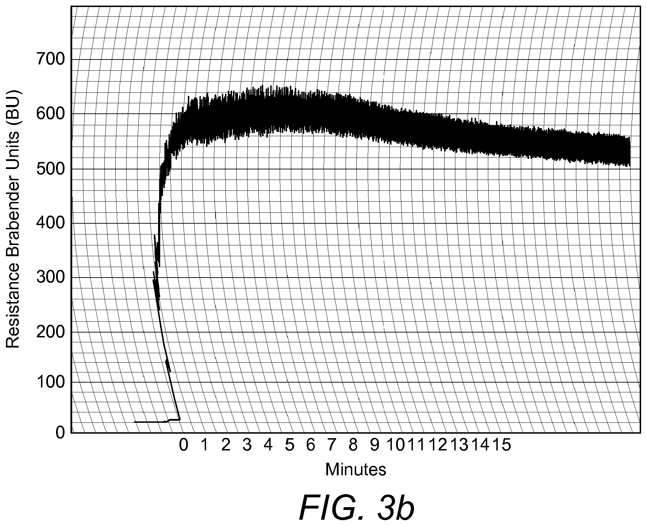

Crackers were made using the method described in Example 1 using a wheat flour with flour protein content of 13% by weight and a degree of softening of 70 (see the farinograph trace of Fig. 3b). The product had a fracturability of 24 events. The lower fracturability as compared with the product of Example 4 was reflected in a less open texture as compared with the cracker of Example 5.

### Example 7 (not according to the invention)

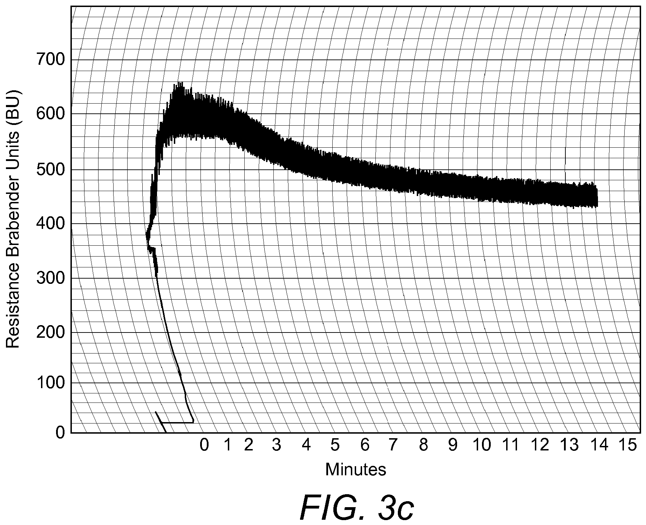

Crackers were made using the method described in Example 1 using a wheat flour with flour protein content of 8.6% by weight and a degree of softening of 145 as determined from the farinograph trace of Fig. 3c. The product so obtained had a fracturability of 25 events.

### Example 8 (not according to the invention)

Crackers were made using the method described in Example 1 using a wheat flour with flour protein content of 10.6% by weight and a degree of softening of 130. The pieces had a final sheet thickness of 2.4mm.

The fracturability of the resultant crackers was 18 events, and had a commensurately less open structure than the products of Examples 6 and 7. It is believed that the relatively high thickness of the dough pieces limited the degree of expansion of the dough pieces. By comparison, the samples made using the same flour and method in Example 1, in which the dough pieces were 1.7 mm thick, had a fracturability of 36.

### Further sample evaluation

Samples of the products of Examples 1, 3, 5, 6, 7 and 8 were analysed using the C-cell structure method and fracturability method described above. The measured values of brightness, the area of air cells as % based on total cross-sectional area of the product, and fracturability are given in the table below where the data is calculated as an average based on ten replicate samples. Two conventional cracker-type products were also examined using the same techniques.

| **Example** | **Fracturability (No. of events)** | **% Total Air Cells** | **Brightness** |
|---|---|---|---|
| Example 1 (wheat flour dusting) | 36 | 54.4 | 96.2 |
| Example 3 (no dusting) | 36 | 54.4 | 96.2 |
| Example 5 | 37 | 52.0 | 95.2 |
| Example 6 | 24 | 52.5 | 111.4 |
| Example 7 | 25 | 51.0 | 104.8 |
| Example 8 | 18 | 52.2 | 103.8 |
| Standard cracker | 2.5 | 49.1 | 118 |
| Gran Cereale Croccanti | 7.5 | 56.3 | 102 |

The cell brightness gives an indication of the coarseness of the structure (range of cell sizes). Lower numbers represent darker products. The darker the colour, the coarser the product (larger air cells). There is a generally negative correlation between fracturability and the brightness/coarseness. The data shows that the stronger protein flour of Example 6 gives the finest structure, followed by the weakest flour (Example 7). As the fracturability gets higher, the coarseness of the product increases. The products of Examples 1, 3 and 5 have lower brightness (implying the presence of deep cells within the product matrix) and higher fracturability (indicative of open cells and/or blisters associated with a hard and crunchy crust). Overall, these attributes are indicative of a more open and bread-like cell structure.

By comparison, the commercial crackers examined were found to have fracturability values well below those preferred in accordance with the present invention. The standard cracker has a high wheat flour content, but is made by a very different process, namely a "sponge and dough" process including a long fermentation of up to 18 hours, with further processing steps being required between fermentation and sheeting. In contrast, preferred crackers of the invention are made by a simple process in which a shorter fermentation step is used and, if desired, the dough may be sheeted immediately after fermentation without any intervening processing of the dough.

## Claims

1. A baked shelf-stable cracker or snack product, comprising:
a. a body comprising at least 60% by weight wheat flour, from 5 to 22 % by weight fat, 0.7 to 7 % by weight leavening agent and up to 5 % by weight water, in each case based on the total weight of said body, and
b. a surface dusting, on at least one surface of the body, of a particulate material, the particulate material comprising at least 30% by weight, based on the total weight of the particulate material, of wheat endosperm particles;
wherein said surface dusting is present on the product in an amount of at least 0.5% by weight, based on the total product weight.

2. A cracker or snack product according to claim 1, wherein the wheat flour is present in said body in an amount of at least 65% by weight, for example at least 70% by weight, based on the total weight of the said body.

3. A cracker or snack product according to claim 1 or claim 2, wherein the particulate material comprises as wheat endosperm particles
Semolina, the semolina having a particle size such that less than 20% by weight of the particles pass through a silk gauze sieve with mesh openings of 315µm, and preferably at least 20%, by weight of the particles pass through a silk gauze sieve with mesh openings of 600µm; or
wheat flour, the wheat flour having a particle size such that at least 20% by weight of the particles pass through a silk gauze sieve with mesh openings of 315µm, and preferably at least 20% by weight of the particles pass through a silk gauze sieve with mesh openings of 200µm; or
a combination thereof.

4. A cracker or snack product according to any one of the preceding claims, wherein the particulate material comprises at least 50% by weight, based on the total weight of the particulate material, of wheat endosperm particles.

5. A cracker or snack product according to any one of the preceding claims, wherein the cracker or snack product is reminiscent of traditional bread.

6. A cracker or snack product according to any one of the preceding claims, wherein the particulate material further includes other cereal flours selected from the group consisting of maize flour, rice flour, oat flour and rye flour, and/or a starchy particulate material such as one or more of tapioca flour, potato flour, potato granules, potato flakes, and vegetable powders and/or starches from any of the afore-mentioned materials.

7. A cracker or snack product according to any one of the preceding claims, wherein at least 65% by weight of the starch content of the product is contributed by wheat flour in the product.

8. A cracker or snack product according to any one of the preceding claims, wherein the product has a cellular structure having an averaged total area of cells when measured in a cross-section through the product of at least 50% of the total cross-sectional area of the product.

9. A cracker or snack product according to any one of the preceding claims, wherein the thickness of the product is such that the height of a stack of ten products is from 60 to 120mm; and/or wherein the product is a snack product and has a width in the range of from 30 to 60mm and a length in the range of from 30 to 70mm, or wherein the product is a cracker and has a width of from 50 to 80mm and a length of from 80 to 130mm.

10. A process for making a shelf-stable cracker or snack product comprising preparing a dough comprising at least 50 parts by weight wheat flour, from 5 to 15 parts by weight fat, 0.3 to 5 parts by weight leavening agent and from 15 to 30 parts by weight water, forming the dough into a dough sheet, cutting dough pieces from the sheet and baking the dough pieces to a water content of not more than 5% by weight to obtain a baked shelf-stable snack product, wherein before or after said cutting of dough pieces from the sheet a dusting of a particulate material comprising wheat endosperm particles is delivered onto a surface of the dough, whereby the baked product has a visible surface dusting comprising wheat endosperm particles.

11. A process according to claim 10, wherein said dusting of a particulate material comprising wheat endosperm particles is delivered onto a surface of the dough sheet and the sheet is subjected to a reducing step in which the sheet passes between opposed reducing rollers and said dusting becomes more firmly adhered to the sheet surface before said cutting step.

12. A process according to claim 10 or 11, wherein the dusting comprises wheat flour or semolina in an amount not less than 50%, by weight based on the total weight of the dusting

13. A process according to any one of claims 10 to 12, wherein the leavening agent is yeast, for example yeast present in an amount of 0.3 to 2.6% by weight based on the total dough weight, and the dough is subjected to a fermentation step, for example a fermentation step for a period of from 10 minutes to 4 hours, before it is sheeted.

14. A process according to any one of claims 10 to 13, wherein the sheet is subjected to at least one reducing step prior to application of said dusting.

15. A process according to any one of claims 10 to 14, wherein the product has an open cellular structure wherein the averaged total area of cells in cross-section is at least 50% of the total cross-sectional area of the product.

16. A process according to any one of claims 10 to 15, wherein the baked pieces are subjected to an oil application step in which they are sprayed with oil, optionally comprising flavouring.

17. A process according to any one of claims 10 to 16, wherein said baking step comprises baking at a temperature of 105°C to 345°C, for example at a temperature of 180 to 240°C for not more than 10 minutes, to a moisture content of not more than 5% by weight based on the total weight of the baked product, and preferably not more than 3% by weight based on the total weight of the baked product; and/or wherein the pieces are baked to a moisture content of not more than 5% and subsequently subjected to a drying step in which the moisture content is reduced to not more than 3% by weight.

18. A process according to any one of claims 10 to 17, wherein the flour has a protein content and protein quality such that the degree of softening of the flour is less than 145 Brabender Units and not less than 80 Brabender Units; and/or wherein the flour has a protein content of from 8.5 to 13.5% by weight.

19. A process according to any one of claims 10 to 18, wherein the thickness of the sheet immediately before cutting is from 1 to 2.5mm; and/or wherein in the case of cracker products pieces are cut with a width of from 50 to 80mm and a length of from 70 to 115mm.

## Patentansprüche

1. Gebackenes lagerstabiles Cracker- oder Snack-Produkt, umfassend:
a. einen Körper mit mindestens 60 Gew.-% Weizenmehl, 5 bis 22 Gew.-% Fett, 0,7 bis 7 Gew.-% Backtriebmittel und bis zu 5 Gew.-% Wasser, jeweils bezogen auf das Gesamtgewicht des Körpers, und
b. eine Bestäubung auf mindestens einer Oberfläche des Körpers aus einem Partikelmaterial, das mindestens 30 Gew.-%, bezogen auf das Gesamtgewicht des Partikelmaterials, an Endospermpartikeln des Weizens umfasst;
wobei die Bestäubung auf dem Produkt in einer Menge von mindestens 0,5 Gew.-% bezogen auf das Gesamtproduktgewicht vorhanden ist.

2. Cracker- oder Snack-Produkt nach Anspruch 1, wobei das Weizenmehl in dem Körper in einer Menge von mindestens 65 Gew.-%, beispielsweise mindestens 70 Gew.-%, bezogen auf das Gesamtgewicht des Körpers vorhanden ist.

3. Cracker- oder Snack-Produkt nach Anspruch 1 oder Anspruch 2, wobei das Partikelmaterial als Endospermpartikel des Weizens umfasst:
Grieß, wobei der Grieß eine Partikelgröße aufweist, bei der weniger als 20 Gew.-% der Partikel durch ein Seidengewebesieb mit einer Lochung von 315 µm gelangen, und vorzugsweise mindestens 20 Gew.-% der Partikel durch ein Seidengewebesieb mit einer Lochung von 600 µm gelangen; oder
Weizenmehl, wobei das Weizenmehl eine Partikelgröße aufweist, bei der mindestens 20 Gew.-% der Partikel durch ein Seidengewebesieb mit einer Lochung von 315 µm gelangen, und vorzugsweise mindestens 20 Gew.-% der Partikel durch ein Seidengewebesieb mit einer Lochung von 200 µm gelangen; oder
eine Kombination davon.

4. Cracker- oder Snack-Produkt nach einem der vorangehenden Ansprüche, wobei das Partikelmaterial mindestens 50 Gew.-%, bezogen auf das Gesamtgewicht des Partikelmaterials, von Endospermpartikeln des Weizens umfasst.

5. Cracker- oder Snack-Produkt nach einem der vorangehenden Ansprüche, wobei das Cracker- oder Snack-Produkt an herkömmliches Brot erinnert.

6. Cracker- oder Snack-Produkt nach einem der vorangehenden Ansprüche, wobei das Partikelmaterial ferner andere Getreidemehle umfasst, ausgewählt aus der Gruppe bestehend aus Maismehl, Reismehl, Hafermehl und Roggenmehl und/oder einem stärkehaltigen Partikelmaterial, wie beispielsweise einem oder mehreren aus Tapiokamehl, Kartoffelmehl, Kartoffelgranulate, Kartoffelflocken und Gemüsepulver und/oder Stärken aus einem der vorgenannten Substanzen.

7. Cracker- oder Snack-Produkt nach einem der vorangehenden Ansprüche, wobei mindestens 65 Gew.-% des Stärkegehalts des Produkts durch Weizenmehl in das Produkt eingebracht werden.

8. Cracker- oder Snack-Produkt nach einem der vorangehenden Ansprüche, wobei das Produkt eine zellulare Struktur mit einer durchschnittlichen Gesamtfläche von Zellen, in einem Querschnitt durch das Produkt gemessen, von mindestens 50 % der Gesamtquerschnittsfläche des Produkts aufweist.

9. Cracker- oder Snack-Produkt nach einem der vorangehenden Ansprüche, wobei die Dicke des Produkt derart bemessen ist, dass die Höhe eines Stapels von zehn Produkten 60 bis 120 mm beträgt; und/oder wobei das Produkt ein Snack-Produkt ist und eine Breite im Bereich von 30 bis 60 mm und eine Länge im Bereich von 30 bis 70 mm aufweist, oder wobei das Produkt ein Cracker ist und eine Breite von 50 bis 80 mm und eine Länge von 80 bis 130 mm aufweist.

10. Verfahren zum Herstellen eines lagerstabilen Cracker- oder Snack-Produkts, umfassend die Herstellung eines Teiges, der mindestens 50 Gewichtsteile Weizenmehl, 5 bis 15 Gewichtsteile Fett, 0,3 bis 5 Gewichtsteile Backtriebmittel und 15 bis 30 Gewichtsteile Wasser umfasst, Ausbilden des Teiges zu einer Teigbahn, Schneiden von Teigstücken aus der Bahn und Backen der Teigstücke auf einem Wassergehalt von nicht mehr als 5 Gew.-%, um ein gebackenes lagerstabiles Snack-Produkt zu erhalten, wobei vor oder nach dem Schneiden von Teigstücken aus der Bahn eine Bestäubung eines Partikelmaterials, das Endospermpartikel von Weizen umfasst, auf eine Oberfläche des Teiges aufgebracht wird, wodurch das gebackene Produkt eine sichtbare Oberflächenbestäubung aufweist, die Endospermpartikel von Weizen umfasst.

11. Verfahren nach Anspruch 10, wobei die Bestäubung eines Partikelmaterials, das Endospermpartikel von Weizen enthält, auf eine Oberfläche der Teigbahn aufgebracht und die Bahn einem Verdünnungsschritt unterzogen wird, bei dem die Bahn zwischen gegenüberliegenden Ausrollwalzen läuft und die Bestäubung vor dem Schneideschritt fester an der Bahnoberfläche haftet.

12. Verfahren nach Anspruch 10 oder 11, wobei die Bestäubung Weizenmehl oder Grieß in einer Menge von nicht weniger als 50 Gew.-% bezogen auf das Gesamtgewicht der Bestäubung umfasst.

13. Verfahren nach einem der Ansprüche 10 bis 12, wobei das Backtriebmittel Hefe ist, beispielsweise Hefe, die in einer Menge von 0,3 bis 2,6 Gew.-% bezogen auf das Gesamtteiggewicht vorhanden ist, und der Teig einen Gärungsschritt durchläuft, beispielsweise einem Gärungsschritt für einen Zeitraum von 10 Minuten bis 4 Stunden, bevor er in Bahnen ausgerollt wird.

14. Verfahren nach einem der Ansprüche 10 bis 13, wobei die Bahn mindestens einen Verdünnungsschritt vor dem Aufbringen der Bestäubung durchläuft.

15. Verfahren nach einem der Ansprüche 10 bis 14, wobei das Produkt eine offene zellulare Struktur aufweist, wobei die durchschnittliche Gesamtfläche der Zellen im Querschnitt mindestens 50 % der gesamten Querschnittsfläche des Produkts beträgt.

16. Verfahren nach einem der Ansprüche 10 bis 15, wobei die gebackenen Stücke einem Ölanwendungsschritt unterzogen werden, bei dem sie mit Öl besprüht werden, das optional Aroma enthält.

17. Verfahren nach einem der Ansprüche 10 bis 16, wobei der Backschritt umfasst: Backen bei einer Temperatur von 105°C bis 345°C, beispielsweise bei einer Temperatur von 180 bis 240°C für nicht mehr als 10 Minuten, auf ein Feuchtigkeitsgehalt von nicht mehr als 5 Gew.-% bezogen auf das Gesamtgewicht des Backprodukts, und vorzugsweise von nicht mehr als 3 Gew.-% bezogen auf das Gesamtgewicht des Backprodukts; und/oder wobei die Stücke auf einen Feuchtigkeitsgehalt von nicht mehr als 5 % gebacken werden und anschließend einem Trocknungsschritt unterzogen werden, bei dem der Feuchtigkeitsgehalt auf nicht mehr als 3 Gew.-% verringert wird.

18. Verfahren nach einem der Ansprüche 10 bis 17, wobei das Mehl einen solchen Proteingehalt und eine solche Proteinqualität aufweist, dass der Erweichungsgrad des Mehls weniger als 145 Brabender-Einheiten und nicht weniger als 80 Brabender-Einheiten beträgt; und/oder wobei das Mehl einen Proteingehalt von 8,5 bis 13,5 Gew.-% aufweist.

19. Verfahren nach einem der Ansprüche 10 bis 18, wobei die Dicke der Bahn direkt vor dem Schneiden 1 bis 2,5 mm beträgt; und/oder wobei in dem Fall von Cracker-Produkten Stücke mit einer Breite von 50 bis 80 mm und einer Länge von 70 bis 115 mm geschnitten werden.

## Revendications

1. Un craquelin ou en-cas, cuit au four, stable à la conservation, comprenant:
a. un corps comprenant au moins 60% en poids de farine de blé, de 5 à 22% en poids de matière grasse, 0,7 à 7% en poids d'agent levant et jusqu'à 5% en poids d'eau, exprimés dans chaque cas sur la base du poids total dudit corps, et
b. un saupoudrage de la surface, sur au moins une surface du corps, par un matériau particulaire, le matériau particulaire comprenant au moins 30% en poids, par rapport au poids total du matériau particulaire, de particules d'endosperme de blé;
dans lequel ledit saupoudrage de surface est présent sur le produit en une quantité d'au moins 0,5% en poids, exprimé par rapport au poids total du produit.

2. Un craquelin ou en-cas selon la revendication 1, dans lequel la farine de blé est présente dans ledit corps en une quantité d'au moins 65% en poids, par exemple d'au moins 70% en poids, exprimés sur la base du poids total dudit corps.

3. Un craquelin ou en-cas selon la revendication 1 ou la revendication 2, dans lequel le matériau particulaire comprend en tant que particules d'endosperme de blé
- de la semoule, cette semoule ayant une taille de particules telle que moins de 20% en poids de ces particules passent à travers un tamis formé d'une gaze de soie, ayant des ouvertures de maille de 315µm, et de préférence au moins 20% en poids des particules, passent à travers un tamis en gaze de soie ayant des ouvertures de maille de 600µm;
ou
- de la farine de blé, cette farine de blé ayant une granulométrie telle qu'au moins 20% en poids des particules passent à travers un tamis en gaze de soie ayant des ouvertures de maille de 315 µm, et de préférence au moins 20% en poids des particules passent à travers un tamis en gaze de soie présentant des ouvertures en maille de 200 µm;
- ou une combinaison de ceux-ci

4. Un craquelin ou en-cas selon l'une quelconque des revendications précédentes, dans lequel le matériau particulaire comprend au moins 50% en poids, par rapport au poids total du matériau particulaire, de particules d'endosperme de blé.

5. Un craquelin ou en-cas selon l'une quelconque des revendications précédentes, dans lequel le craquelin ou en-cas rappelle le pain traditionnel.

6. Un craquelin ou en-cas selon l'une quelconque des revendications précédentes, dans lequel le matériau particulaire comprend en outre d'autres farines de céréales choisies dans le groupe consistant en la farine de maïs, la farine de riz, la farine d'avoine et la farine de seigle, et/ou un matériau particulaire amylacé tel que un ou plusieurs de la liste formée de la farine de tapioca, la farine de pomme de terre, les granules de pomme de terre, les flocons de pomme de terre et les poudres de légumes et/ou amidons à partir de l'un quelconque des matériaux susmentionnés.

7. Un craquelin ou en-cas selon l'une quelconque des revendications précédentes, dans lequel au moins 65% en poids de la teneur en amidon du produit sont amenés par la farine de blé contenue dans le produit.

8. Un craquelin ou en-cas selon l'une quelconque des revendications précédentes, dans lequel le produit présente une structure cellulaire ayant une surface totale moyenne de cellules mesurées selon une coupe transversale à travers le produit d'au moins 50% de la coupe transversale totale du produit.

9. Un craquelin ou en-cas selon l'une quelconque des revendications précédentes,
- dans lequel l'épaisseur du produit est telle que la hauteur d'un paquet de dix produits est comprise entre 60 et 120 mm; et/ou
- dans lequel le produit est un produit pour en-cas et présente une largeur dans la plage de 30 à 60 mm et une longueur dans la plage de 30 à 70 mm,
- ou dans lequel le produit est un craquelin et a une largeur de 50 à 80 mm et une longueur de 80 à 130 mm

10. Un procédé de fabrication d'un craquelin ou d'un en-cas stable à la conservation, comprenant:
- la préparation d'une pâte comprenant au moins 50 parties en poids de farine de blé, de 5 à 15 parties en poids de matières grasses, 0,3 à 5 parties en poids d'agent levant et de 15 à 30 parties en poids d'eau,
- la transformation de la pâte en une feuille de pâte,
- la coupe de morceaux de pâte à partir de la feuille et
- la cuisson des morceaux de pâte jusqu'à l'obtention d'une teneur en eau ne dépassant pas 5% en poids pour obtenir un produit consistant en un craquelin ou en-cas, cuit au four, stable à la conservation dans lequel avant ou après la coupe des morceaux de pâte depuis la feuille, un saupoudrage d'un matériau particulaire comprenant des particules d'endosperme de blé est appliqué sur une surface de la pâte, de sorte que le produit après cuisson comporte un saupoudrage comprenant des particules d'endosperme de blé.

11. Un procédé selon la revendication 10, dans lequel ledit saupoudrage d'un matériau particulaire comprenant des particules d'endosperme de blé est appliqué sur une surface de la feuille de pâte et la feuille est soumise à une étape de réduction dans laquelle la feuille passe entre des rouleaux réducteurs opposés et ledit saupoudrage adhère ainsi plus fermement à la surface de la feuille avant ladite étape de coupe.

12. Un procédé selon la revendication 10 ou 11, dans lequel le saupoudrage comprend de la farine de blé ou de la semoule de blé en une quantité d'au moins 50% en poids par rapport au poids total du saupoudrage.

13. Un procédé selon l'une quelconque des revendications 10 à 12, dans lequel l'agent levant est une levure, par exemple une levure présente en une quantité de 0,3 à 2,6% en poids par rapport au poids total de la pâte, et la pâte est soumise à une étape de fermentation, par exemple une étape de fermentation pendant une période allant de 10 minutes à 4 heures, avant qu'elle soit mise en feuilles.

14. Un procédé selon l'une quelconque des revendications 10 à 13, dans lequel la feuille est soumise à au moins une étape de réduction avant l'application dudit saupoudrage .

15. Un procédé selon l'une quelconque des revendications 10 à 14, dans lequel le produit a une structure cellulaire ouverte dans laquelle la surface totale moyenne des cellules en coupe transversale forme au moins 50% de la surface totale en coupe transversale du produit.

16. Un procédé selon l'une quelconque des revendications 10 à 15, dans lequel les morceaux cuits sont soumis à une étape d'application d'huile dans laquelle ils sont pulvérisés d'huile, comprenant éventuellement un aromatisant.

17. Un procédé selon l'une quelconque des revendications 10 à 16, dans lequel ladite étape de cuisson comprend une cuisson à une température de 105°C à 345°C, par exemple à une température de 180 à 240°C pendant pas plus de 10 minutes, jusqu'à une teneur en humidité d'au plus 5% en poids exprimés sur la base du poids total du produit après cuisson et de préférence d'au plus 3% en poids sur la base du poids total du produit après cuisson; et/ou dans lequel les morceaux sont cuits jusqu'à l'obtention d'une teneur en humidité d'au plus 5% et ensuite soumis à une étape de séchage dans laquelle la teneur en humidité est réduite à au plus 3% en poids.

18. Un procédé selon l'une quelconque des revendications 10 à 17, dans lequel la farine a une teneur en protéine et une qualité de protéine telles que le degré de ramollissement de la farine soit inférieur à 145 unités Brabender et non inférieur à 80 unités Brabender; et/ou dans lequel la farine a une teneur en protéines de 8,5 à 13,5% en poids.

19. Un procédé selon l'une quelconque des revendications 10 à 18, dans lequel l'épaisseur de la feuille immédiatement avant la coupe est comprise entre 1 et 2,5 mm; et/ou dans le cas de produits de craquage, les pièces sont coupées à une largeur de 50 à 80 mm et une longueur de 70 à 115 mm.
